# EUROPEAN PATENT APPLICATION

(11) **EP 4 700 551 A1**
(43) Date of publication of application: **25.02.2026**
(21) Application number: 24792053.1
(22) Date of filing: 17.04.2024
(51) Int. Cl.: G06F 3/04817

(54) **ICON DISPLAY CONTROL METHOD AND APPARATUS, ELECTRONIC DEVICE, AND MEDIUM**

(30) Priority: 19.04.2023 CN 202310426485
(71) Applicant: Vivo Mobile Communication Co., Ltd., Dongguan, Guangdong 523863 (CN)
(72) Inventor: SU, Yuezhi, Dongguan, Guangdong 523863 (CN)
(74) Representative: Murgitroyd & Company
(86) International application number: PCT/CN2024/088404
(87) International publication number: WO 2024/217468

(57) **Abstract**

This application discloses an icon display control method and apparatus, an electronic device, and a medium, pertaining to the field of display technologies. The method includes: receiving a first input performed by a user for a target program sign in a program download interface; and in response to the first input, downloading a target program and displaying a target icon at a target icon position on a desktop; where the target program is a program indicated by the target program sign; the target icon is a program icon of the target program; and the target icon position is an icon position indicated by an input end position of the first input, or the target icon position is an icon position selected by a user on the desktop before entering the program download interface or after selecting the target program sign.

## Description

### CROSS-REFERENCE TO RELATED APPLICATION

This application claims priority to Chinese Patent Application No. 202310426485.X, filed in China on April 19, 2023, which is incorporated herein by reference in its entirety.

### TECHNICAL FIELD

This application pertains to the field of display technologies, and specifically relates to an icon display control method and apparatus, an electronic device, and a medium.

### BACKGROUND

With continuous development of electronic device functionalities, the number of application programs on electronic devices is increasing. When a user needs to download an application program, the user first performs application search in the APP store on the desktop of the electronic device, triggering the electronic device to download once the desired application program is found.

After completing download of the application program, the electronic device can install the application program and display an icon of the application program on the desktop. For example, if the desktop currently has four pages, after downloading one application program, the electronic device may add a new page, that is, the 5th page, and the electronic device displays an icon of the downloaded application program on the 5th page. However, in the above process, since the electronic device displays the icon of the newly downloaded application program in a fixed manner, a display position of the icon of the application program icon may not meet a user's desired icon display position. Consequently, the user needs to drag the icon of the application program across one or more pages on the desktop to the desired display position, making the icon operation cumbersome and time-consuming.

### SUMMARY

Embodiments of this application aim to provide an icon display control method and apparatus, an electronic device, and a medium, which simplifies the operation of icon display control and improves operation efficiency.

According to a first aspect, an embodiment of the application provides an icon display control method. The method includes: receiving a first input performed by a user for a target program sign in a program download interface; and in response to the first input, downloading a target program and displaying a target icon at a target icon position on a desktop; where the target program is a program indicated by the target program sign; the target icon is a program icon of the target program; and the target icon position is an icon position indicated by an input end position of the first input, or the target icon position is an icon position selected by the user on the desktop before entering the program download interface or after selecting the target program sign.

According to a second aspect, an embodiment of the application provides an icon display control apparatus. The apparatus includes: a receiving module configured to receive a first input performed by a user for a target program sign in a program download interface; a downloading module, configured to download a target program in response to the first input received by the receiving module; and a display module, configured to display a target icon at a target icon position on a desktop; where the target program is a program indicated by the target program sign; the target icon is a program icon of the target program; and the target icon position is an icon position indicated by an input end position of the first input, or the target icon position is an icon position selected by the user on the desktop before entering the program download interface or after selecting the target program sign.

According to a third aspect, an embodiment of this application provides an electronic device, where the electronic device includes a processor and a memory, and a program or instructions executable on the processor are stored in the memory. When the program or the instructions are executed by the processor, the steps of the method according to the first aspect are implemented.

According to a fourth aspect, an embodiment of this application provides a readable storage medium, where a program or instructions are stored in the readable storage medium, and when the program or the instructions are executed by a processor, the steps of the method according to the first aspect are implemented.

According to a fifth aspect, an embodiment of this application provides a chip, where the chip includes a processor and a communication interface, the communication interface is coupled to the processor, and the processor is configured to run a program or instructions so as to implement the method according to the first aspect.

According to a sixth aspect, an embodiment of the application provides a computer program product, the program product is stored in a storage medium, and the program product is executed by at least one processor to implement the steps of the method according to the first aspect.

In some embodiments of this application, after receiving a first input performed by a user for a target program sign in a program download interface, the electronic device can download a target program indicated by the target program sign and display a program icon of the target program at a target icon position on a desktop. The target icon position is an icon position indicated by an input end position of the first input, or an icon position selected by the user on the desktop before entering the program download interface or after selecting the target program sign. In this solution, the user can perform a first input for the target program sign in the program download interface of the electronic device, so that after completing the download of the target program indicated by the target program sign, the electronic device can directly display the program icon of the target program at the icon position indicated by the input end position of the first input, or directly display the program icon of the target program at the icon position selected by the user on the desktop before entering the program download interface, or directly display the program icon of the target program at the icon position selected by the user on the desktop after selecting the target program sign, to meet the user's icon display requirements without requiring the user to drag the program's icon to the desired display position. This simplifies the operation of icon display control and improves operation efficiency.

### BRIEF DESCRIPTION OF DRAWINGS

FIG. 1 is a schematic diagram of an example of icon positions on a mobile phone desktop according to some embodiments of this application;
FIG. 2 is a schematic diagram of an icon display control method according to some embodiments of this application;
FIG. 3A is a schematic diagram of an example of a program download interface of a mobile phone APP store according to some embodiments of this application;
FIG. 3B is a schematic diagram of an example of an interface where an object follows movement of an input subject corresponding to the program download interface according to some embodiments of this application;
FIG. 4 is a schematic diagram of an example of an interface where an object follows movement of an input subject corresponding to the program download interface according to some embodiments of this application;
FIG. 5 is a schematic diagram of an example of switching from a program download interface to a mobile phone desktop according to some embodiments of this application;
FIG. 6A is a schematic diagram of an example of a mobile phone split-screen display of a program download interface and a desktop according to some embodiments of this application;
FIG. 6B is a schematic diagram of an example of a mobile phone split-screen display of a program download interface and a desktop according to some embodiments of this application;
FIG. 7 is a schematic diagram of an example of an interface where an object follows movement of an input subject corresponding to the program download interface according to some embodiments of this application;
FIG. 8 is a schematic diagram of an example of switching from a program download interface to a mobile phone desktop according to some embodiments of this application;
FIG. 9 is a schematic diagram of an example of a mobile phone split-screen display of a program download interface and a desktop according to some embodiments of this application;
FIG. 10 is a schematic diagram of an example of an interface for determining a target icon position based on an icon position where a target object is located at the end of a first input according to some embodiments of this application;
FIG. 11 is a schematic diagram of an example of an interface for an icon state of a target icon according to some embodiments of this application;
FIG. 12 is a schematic diagram of an example of an interface for an icon state of a target icon according to some embodiments of this application;
FIG. 13 is a schematic diagram of an example of an interface where a target object is an indication sign according to some embodiments of this application;
FIG. 14 is a schematic diagram of an example of an interface for updating an indication sign to a target icon according to some embodiments of this application;
FIG. 15A is a schematic diagram of an example of an interface where a user performs a second input for a second icon position on a desktop according to some embodiments of this application;
FIG. 15B is a schematic diagram of an example of an interface where a user performs a second input for a second icon position on a desktop according to some embodiments of this application;
FIG. 15C is a schematic diagram of an example of an interface where a user performs a second input for a second icon position on a desktop according to some embodiments of this application;
FIG. 16A is a schematic diagram of an example of an interface for marking a second icon position as a target icon position according to some embodiments of this application;
FIG. 16B is a schematic diagram of an example of an interface for marking a second icon position as a target icon position according to some embodiments of this application;
FIG. 16C is a schematic diagram of an example of an interface for marking a second icon position as a target icon position according to some embodiments of this application;
FIG. 17 is a schematic diagram of an example of a program download interface of a mobile phone APP store according to some embodiments of this application;
FIG. 18 is a schematic diagram of an example of an interface where a user performs multiple drag sub-inputs according to some embodiments of this application;
FIG. 19 is a schematic diagram of an example of an interface displaying target program signs dragged by multiple drag sub-inputs according to some embodiments of this application;
FIG. 20 is a schematic diagram of an example of an interface for a slide sub-input from a second area to a target icon position according to some embodiments of this application;
FIG. 21 is a schematic diagram of an example of switching from a program download interface to a desktop according to some embodiments of this application;
FIG. 22 is a schematic diagram of an example of a folder icon according to some embodiments of this application;
FIG. 23 is a schematic diagram of an example of an interface where a user performs multiple drag sub-inputs according to some embodiments of this application;
FIG. 24 is a schematic diagram of an example of an interface for a slide sub-input from a third area to a fourth area according to some embodiments of this application;
FIG. 25A is a schematic diagram of an example of an interface for switching from a program download interface to a desktop according to some embodiments of this application;
FIG. 25B is a schematic diagram of an example of a mobile phone split-screen display of a program download interface and a desktop according to some embodiments of this application;
FIG. 26 is a schematic diagram of an example of an interface for N selection sub-inputs by a user for N icon positions according to some embodiments of this application;
FIG. 27 is a schematic diagram of an example of an interface displaying program icon of N target programs at N icon positions according to some embodiments of this application;
FIG. 28 is a schematic diagram of an example of a program download interface of a mobile phone APP store according to some embodiments of this application;
FIG. 29 is a schematic diagram of the structure of an icon display control apparatus according to some embodiments of this application;
FIG. 30 is a schematic diagram of a hardware structure of an electronic device according to some embodiments of this application; and
FIG. 31 is a schematic diagram of a hardware structure of an electronic device according to some embodiments of this application.

### DETAILED DESCRIPTION OF EMBODIMENTS

The following clearly describes the technical solutions in some embodiments of this application with reference to the accompanying drawings in some embodiments of this application. Apparently, the described embodiments are only some rather than all of the embodiments of this application. All other embodiments obtained by persons of ordinary skill in the art based on the embodiments of this application fall within the protection scope of this application.

The terms "first", "second", and the like in this specification and claims of this application are used to distinguish between similar objects rather than to describe a specific order or sequence. It should be understood that the terms used in this way are interchangeable in appropriate circumstances such that the embodiments of this application can be implemented in other orders than the order illustrated or described herein. In addition, objects distinguished by "first" and "second" are generally of a same type, and the quantities of the objects are not limited. For example, there may be one or more first objects. In addition, the character "/" generally indicates an "or" relationship between associated objects.

The following describes in detail an icon display control method provided in the embodiments of this application by using specific embodiments and application scenarios thereof with reference to the accompanying drawings.

The icon display control method in some embodiments of this application can be applied to a scenario where an electronic device downloads a program and manages program icons.

In the solution of this application, after receiving a first input performed by a user for a target program sign in a program download interface, the electronic device can download a target program indicated by the target program sign and display a program icon of the target program at a target icon position on a desktop. The target icon position is an icon position indicated by an input end position of the first input, or an icon position selected by the user on the desktop before entering the program download interface or after selecting the target program sign. In this solution, the user can perform a first input for the target program sign in the program download interface of the electronic device, so that after completing the download of the target program indicated by the target program sign, the electronic device can directly display the program icon of the target program at the icon position indicated by the input end position of the first input, or directly display the program icon of the target program at the icon position selected by the user on the desktop before entering the program download interface, or directly display the program icon of the target program at the icon position selected by the user on the desktop after selecting the target program sign, to meet the user's icon display requirements without requiring the user to drag the program's icon to the desired display position. This simplifies the operation of icon display control and improves operation efficiency.

It should be noted that the icon position in this application refers to an area on a desktop page where an icon can be placed, that is, a display area capable of displaying an icon, which may include blank icon positions and non-blank icon positions. A blank icon position is an icon position on the desktop of the electronic device or in a folder on the desktop where no object is displayed; and a non-blank icon position is an icon position on the desktop of the electronic device where a program icon, folder icon, or function icon is displayed.

In some embodiments of this application, the desktop of the electronic device includes multiple icon positions. For example, the desktop of the electronic device may include m*n icon positions, where m and N are positive integers, including but not limited to 3*3, 3*4, 4*4, 4*6, and 4*8. Here, 3*3 icon positions means that the icon positions on the desktop of the electronic device include 3 rows with 3 icon positions per row, totaling 9 icon positions, each capable of displaying one program icon or function icon; 3*4 icon positions means 3 rows with 4 icon positions per row, totaling 12 icon positions, each capable of displaying one program icon or function icon; and 4*4 icon positions means 4 rows with 4 icon positions per row, totaling 16 icon positions, each capable of displaying one program icon or function icon.

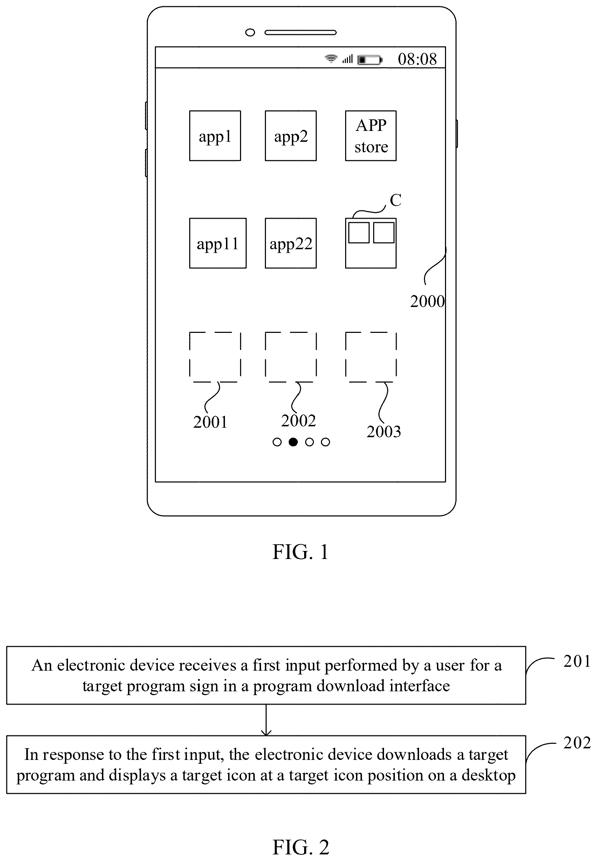

For example, the electronic device being a mobile phone is used as an example for description. As shown in FIG. 1, the mobile phone displays a desktop 2000, and the desktop 2000 includes 3*3 icon positions. The first 2*3 icon positions display objects, such as program icons and folder icons, making these icon positions non-blank icon positions, that is, the icon positions displaying an app1 icon, an app2 icon, an app11 icon, an app22 icon, a folder icon C, and an APP store icon; and remaining icon positions that do not display any objects are blank icon positions, that is, an icon position 2001, an icon position 2002, and an icon position 2003.

It should be noted that, in some embodiments of this application, blank icon positions are marked with dashed boxes in the figures, the dashed boxes are for illustrative purposes only, and these dashed boxes are not displayed in actual applications.

The icon display control method in some embodiments of this application can be applied to scenarios where a user needs to download one new application program and wants to place an icon of the newly downloaded program at a specific position on a specific desktop page.

FIG. 2 is a flowchart of an icon display control method according to an embodiment of this application. As shown in FIG. 2, the icon display control method provided by this embodiment of this application may include the following steps 201 and 202.

Step 201: An electronic device receives a first input performed by a user for a target program sign in a program download interface.

In some embodiments of this application, a sign is a text, a symbol, an image, or the like used to indicate information, which may be carried by a control or other containers as a carrier for displaying information, including but not limited to a text sign, a symbol sign, and an image sign.

In some embodiments of this application, the program download interface may be an interface for downloading application programs. The program download interface includes but is not limited to any one of the following: a program download interface in an APP store, and a program download interface in a webpage, where the webpage may be a webpage in a browser program or another application page capable of downloading application programs.

In some embodiments of this application, the target program sign may include at least one of the following: a program name, a program download control, and a program icon.

For example, the program name may include but is not limited to at least one of the following: music application program names, such as "Ku** Music" and "Q** Music"; video application program names, such as "Ten** Video" and "You** Video"; novel application program names, such as "Fan** Novel" and "Shu** Novel"; game application program names, such as "King** Glory" and "Mo** World"; learning application program names, such as "Chao** Learning" and "Mu** Course"; and travel application program names, such as "Xie** Travel" and "Tong** Travel".

In some embodiments of this application, the first input is used to select a sign of a program to be downloaded, triggering the electronic device to download the program corresponding to the sign selected by the first input.

In some embodiments of this application, the first input includes but is not limited to: a touch input by the user on the target program sign in the program download interface using a finger or a touch device such as a stylus, a voice command input by the user, a specific gesture input by the user, or other feasible inputs. Specifically, this may be determined based on an actual use requirement, and is not limited in this embodiment of the present invention.

In some embodiments of this application, the specific gesture may be any one of a single-tap gesture, a slide gesture, a drag gesture, a pressure recognition gesture, a long-press gesture, an area change gesture, a double-press gesture, or a double-tap gesture.

In some embodiments of this application, the tap input may be a single-tap input, a double-tap input, or any number of tap inputs, and may also be a long-press input or a short-press input.

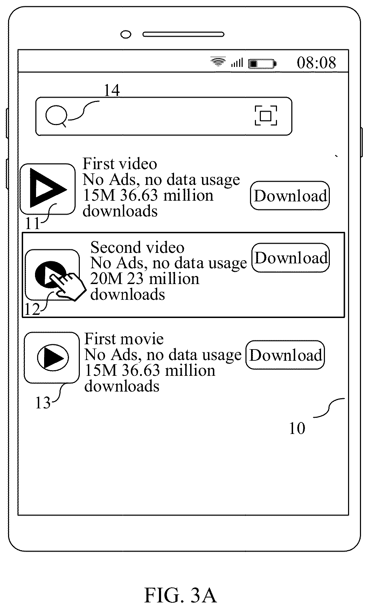

For example, the electronic device being a mobile phone is used as an example for description. As shown in FIG. 3A, the mobile phone displays a program download interface 10, where the program download interface 10 includes a first video program sign 11, a second video program sign 12, a first movie and TV program sign 13, and a search control 14. The user can perform a first input for a program sign in the program download interface to trigger the electronic device to download a program indicated by the target program sign. For example, the user can perform a first input for the second video program sign 12.

Step 202: In response to the first input, the electronic device downloads a target program and displays a target icon at a target icon position on a desktop.

In some embodiments of this application, the target program is a program indicated by the target program sign.

In some embodiments of this application, the program indicated by the target program sign may be an application program indicated by the target program sign.

For example, the application program indicated by the target program sign may include but is not limited to at least one of the following: music application programs, video application programs, novel application programs, game application programs, learning application programs, and travel application programs.

In some embodiments of this application, the target icon is a program icon of the target program.

In some embodiments of this application, the program icon may be an icon of an application program.

In some embodiments of this application, the target icon position can be determined in three manners: in manner 1, the target icon position is an icon position indicated by the input end position of the first input; in manner 2, the target icon position is an icon position selected by the user on the desktop before entering the program download interface; in manner 3, the target icon position is an icon position selected by the user on the desktop after selecting the target program sign.

It should be noted that the icon position indicated by the input end position of the first input can be understood as: an icon position on the desktop where an input subject is located when the first input ends.

For example, the user's right index finger performs the first input in the program download interface, and when the first input ends, the user's right index finger stays at icon position c on the desktop, and the icon position c is the icon position indicated by the input end position of the first input.

For example, the user's left index finger performs the first input for a first video program sign in the program download interface, and when the first input ends with the user's left index finger releasing the first video program sign, the user's left index finger stays at icon position d on the desktop, and the icon position d is the icon position indicated by the input end position of the first input.

In some embodiments of this application, the program download interface is an interface for downloading application programs, the program download interface including a program sign of at least one recommended application program for download. Before "downloading the target program and displaying the target icon at the target icon position on the desktop" in step 202, the icon display control method according to some embodiments of this application further includes the following step 202a.

Step 202a: In response to the first input, in a case that the first input is a slide input and an input start position of the first input is located at the target program sign, the electronic device controls a target object to follow movement of the input subject of the first input.

In some embodiments of this application, the target object is the target icon or an indication sign used to indicate the target program.

In some embodiments of this application, in a case that the first input is a slide input and the input start position of the first input is located at the target program sign, the electronic device generates, based on the target program sign, a corresponding target icon or an indication sign used to indicate the target program, to follow the movement of the input subject of the first input.

In some embodiments of this application, the indication sign used to indicate the target program may be the target program sign or a symbol, graphic, or pattern capable of indicating the target program.

In some embodiments of this application, the input subject may be a stylus or touch device of the electronic device, or the user's finger, which is not limited in the embodiments of this application.

For example, the start position of the slide input is located at the target program sign, such as the "Xi** Video" program sign, with the input subject being the user's right index finger. During the slide input by the user's right index finger on the "Xi** Video" program sign, the "Xi** Video" program sign follows the user's right index finger, moving from the position of the "Xi** Video" program sign.

For example, the start position of the slide input is located at the target program sign, such as the "You** Video" program sign, with the input subject being the stylus of the electronic device. During the slide input by the stylus of the electronic device on the "You** Video" program sign, the "You** Video" program sign follows the stylus of the electronic device, moving from the position of the "Xi** Video" program sign.

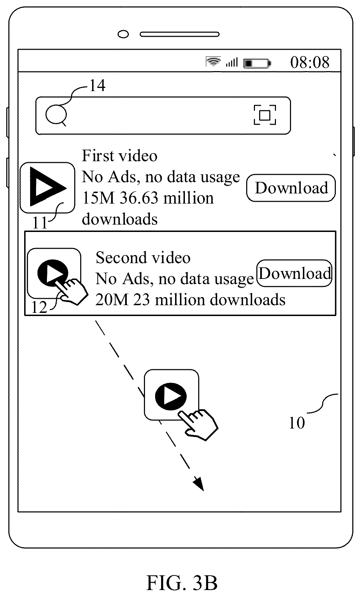

For example, as shown in FIG. 3B in conjunction with FIG. 3A, the input subject of the first input by the user is the user's finger, and in a case that the input start position of the first input is located at the target program sign, such as the second video program sign 12, the mobile phone can control the target object to follow the movement of the user's finger, that is, the second video program sign 12 follows the movement of the user's finger.

Thus, in the program download interface, the effect of dragging the target object can be achieved. Since the target object moves synchronously with the input subject, the user can clearly determine whether the current icon position of the target object is the desired display position based on the display position of the target object, making it convenient for the user to accurately determine whether the current icon position is a desired placement position.

In some embodiments of this application, after step 202a, the icon display control method provided by the embodiments of this application further includes any one of the following steps 202b1 to 202b4.

Step 202b1: In a case that the indication sign of the target program follows the input subject of the first input to move to a first area in the program download interface, the electronic device switches the program download interface to the desktop.

In some embodiments of this application, the first area may be an edge area of the screen of the electronic device or a specific area in the program download interface.

The specific area is a predefined area in the program download interface used to trigger switching to the desktop. Alternatively, the specific area is an area displaying a switching control or a switching sign, where the switching control or switching sign is used to trigger switching from the program download interface to the desktop.

For example, the specific area is a predefined area for triggering switching to the desktop in the program download interface, such as an area A1 predefined for triggering switching to the desktop in the program download interface. Alternatively, the specific area is an area displaying a switching control or a switching sign, such as an area A2 displaying a switching control B or a switching sign C.

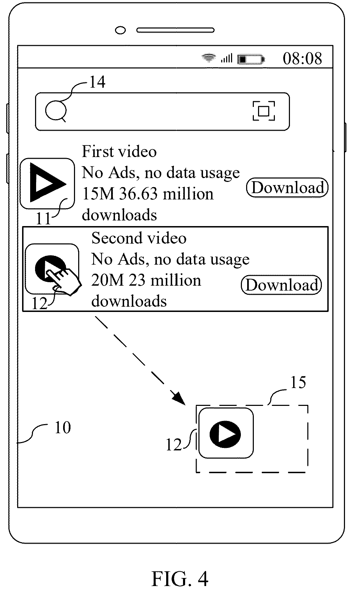

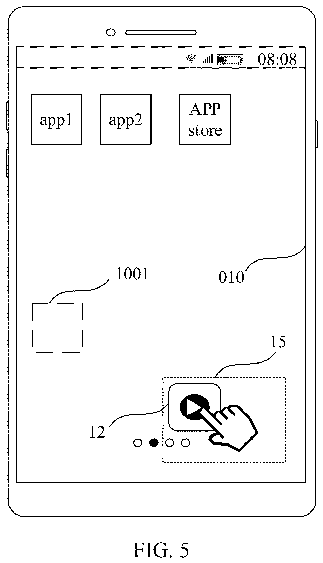

For example, as shown in FIG. 4 in conjunction with FIG. 3B, the mobile phone can control the second video program sign 12 to follow the movement of the user's finger to a first area, for example, the first area is a specific area, and the specific area is an area 15 predefined for triggering switching to the desktop in the program download interface. In this case, as shown in FIG. 5, the mobile phone can switch the program download interface 10 to the desktop 010, and the mobile phone displays the desktop 010, where the desktop 010 includes an app1 icon, an app2 icon, an APP store icon, and the second video program sign 12, with a blank icon position 1001 present on the desktop 010.

In some embodiments of this application, the electronic device can close the program download interface and display the desktop to implement switching from the program download interface to the desktop. Alternatively, the electronic device can run the program download interface in the background and display the desktop to implement switching from the program download interface to the desktop.

Step 202b2: In a case that the indication sign of the target program follows the input subject of the first input to move to a first area in the program download interface, the electronic device displays the program download interface and the desktop in a split-screen manner.

In some embodiments of this application, the electronic device can adopt a left-right split-screen mode or an up-down split-screen mode to divide the screen into two or more screen areas, with any two of the split-screen areas used to display the program download interface and the desktop. This embodiment is described by using the number of screen areas after screen splitting as two screen areas as an example.

In some embodiments of this application, a split-screen ratio of the electronic device is an equal split-screen ratio, that is, the sizes of the left and right screen areas after screen splitting are the same, or the sizes of the top and bottom screen areas after screen splitting are the same. Alternatively, the split-screen ratio of the electronic device is a 3:7 split-screen ratio, that is, the size ratio of the left and right screen areas after screen splitting is 3:7, or the size ratio of the top and bottom screen areas after screen splitting is 3:7. Alternatively, the split-screen ratio of the electronic device is a 7:3 split-screen ratio, that is, the size ratio of the left and right screen areas after screen splitting is 7:3, or the size ratio of the top and bottom screen areas after screen splitting is 7:3. It should be noted that other split-screen ratios may also be used, which can be specifically determined based on an actual use requirement, and is not limited in the embodiments of this application.

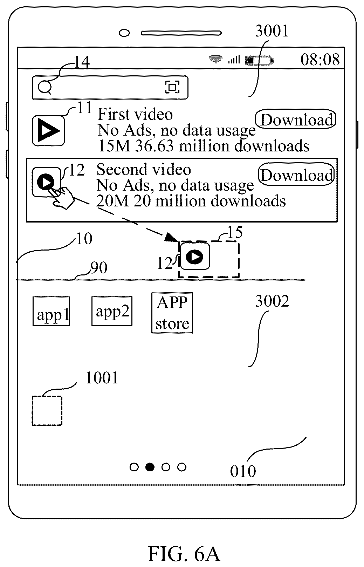

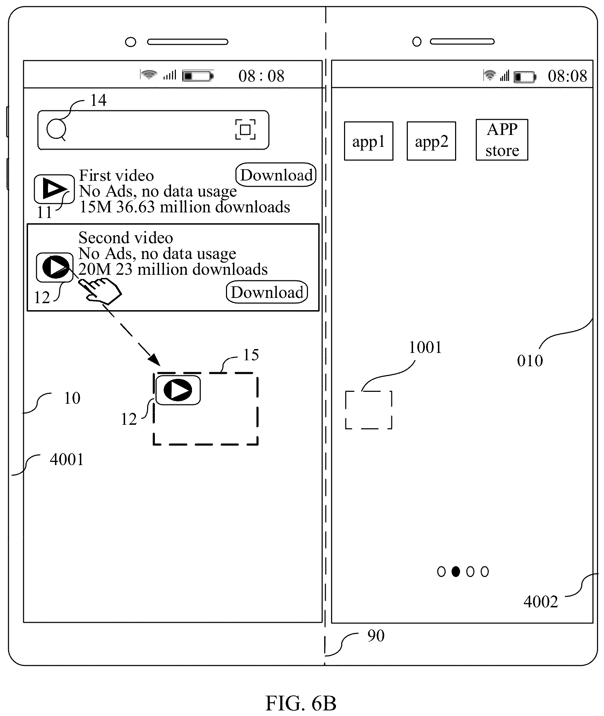

For example, as shown in FIG. 4, the mobile phone can control the second video program sign 12 to follow the movement of the user's finger to a first area, for example, the first area is a specific area, and the specific area is an area 15 predefined for triggering switching to the desktop in the program download interface. In this case, as shown in FIG. 6A, the mobile phone can adopt an up-down split-screen mode with an equal split-screen ratio to divide the mobile phone screen into a screen area 3001 and a screen area 3002, where the screen area 3001 and the screen area 3002 are separated by a dividing line 90, with the screen area 3001 displaying the program download interface 10 and the screen area 3002 displaying the desktop 010. Alternatively, as shown in FIG. 6B, the mobile phone can adopt a left-right split-screen mode with a 7:3 split-screen ratio to divide the mobile phone screen into a screen area 4001 and a screen area 4002, where the screen area 4001 and the screen area 4002 are separated by a dividing line 91, with the screen area 4001 displaying the program download interface 10 and the screen area 4002 displaying the desktop 010.

Step 202b3: In a case that a distance moved by the indication sign of the target program following the input subject of the first input is greater than or equal to a distance threshold, the electronic device switches the program download interface to the desktop.

It should be noted that the distance threshold is a movement distance threshold used to trigger switching from the program download interface to the desktop, and the distance threshold may be a default value set by the electronic device system or preset by the user based on actual statuses, which is not limited in the embodiments of this application.

For example, the distance threshold may be the length of one icon position, the length of two icon positions, or a fixed value. For example, the length of one icon position may be 1 centimeter (cm) or 1.5 cm; the fixed value here may be 1 cm, 2 cm, or the like.

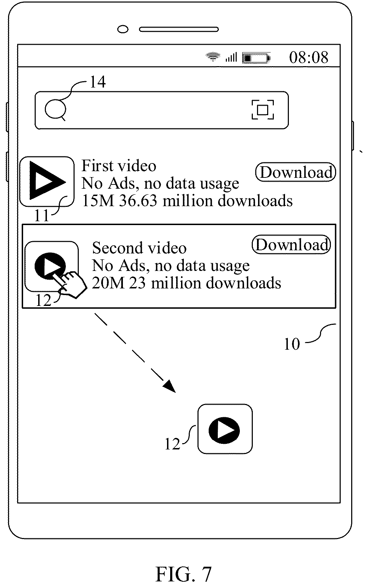

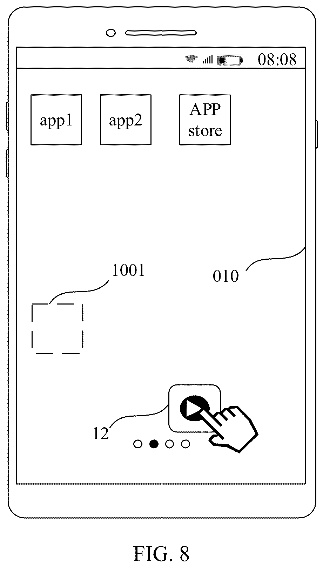

For example, as shown in FIG. 7, the mobile phone can control the second video program sign 12 to follow the movement of the user's finger. When the distance moved by the second video program sign 12 following the user's finger is greater than 1 cm, such as 2 cm, as shown in FIG. 8, the mobile phone can switch the program download interface 10 to the desktop 010 and display the second video program sign 12 on the desktop 010.

Step 202b4: In a case that a distance moved by the indication sign of the target program following the input subject of the first input is greater than or equal to a distance threshold, the electronic device displays the program download interface and the desktop in a split-screen manner.

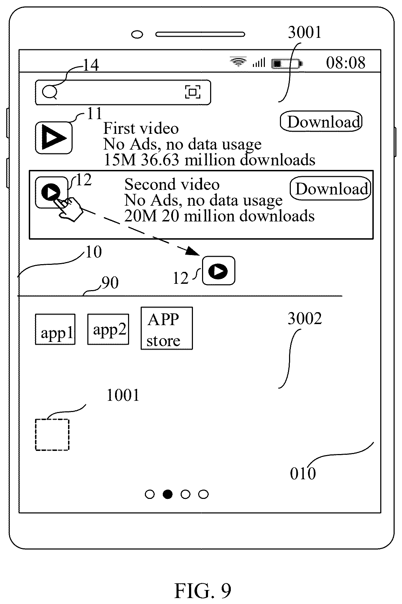

For example, as shown in FIG. 7, the mobile phone can control the second video program sign 12 to follow the movement of the user's finger. When the distance moved is greater than 1 cm, such as 2 cm, as shown in FIG. 9, the mobile phone adopts an up-down split-screen mode with an equal split-screen ratio to divide the mobile phone screen into a screen area 3001 and a screen area 3002, where the screen area 3001 and the screen area 3002 are separated by a dividing line 90, with the screen area 3001 displaying the program download interface 10 and the screen area 3002 displaying the desktop 010.

In this way, firstly, based on the area and distance moved by the indication sign of the target program following the input subject of the first input, the electronic device can determine whether to display the desktop, avoiding redundant desktop display operations due to user mis-triggers; secondly, the electronic device can display the desktop through switching or split-screen modes, improving the flexibility of desktop display.

In some embodiments of this application, step 202 can specifically be implemented through the following steps 202c1 and 202c2, or through the following steps 202c1 and 202c3.

Step 202c1: In response to the first input, in a case that the desktop is displayed and the first input ends, the electronic device determines a first icon position at which the target object is located at the end of the first input as the target icon position.

It can be understood that for the solution in which the target icon position is the icon position indicated by the input end position of the first input, it can be implemented through step 202a. The first input is an input sliding from the target program sign to the first icon position on the desktop, and the icon position at which the target object is located is the first icon position.

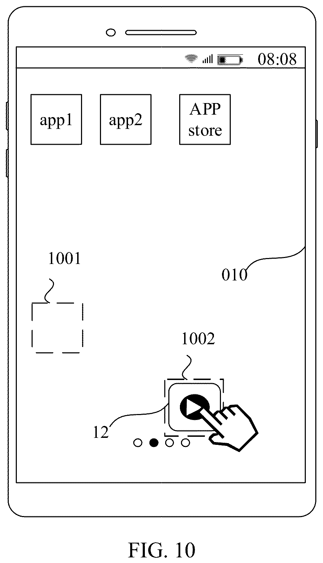

For example, as shown in FIG. 10, the mobile phone displays the desktop 010, and the mobile phone can control the second video program sign 12 to follow the movement of the user's finger. When the mobile phone controls the second video program sign 12 to follow the user's finger to move to an icon position 1002, the mobile phone can determine the icon position 1002 as the target icon position.

Step 202c2: In a case that the target object is the target icon, the electronic device downloads the target program, updates the target icon to a first icon state during downloading, and updates the target icon to a second icon state after the target program is downloaded.

In some embodiments of this application, the first icon state indicates that the target program is in a downloading state.

In some embodiments of this application, the electronic device can add a mask layer on the target icon to indicate that the target program is in the downloading state, where a larger download progress indicates a larger mask layer area, and the mask layer automatically disappears when the download is complete Alternatively, the electronic device can add a layer to the target icon and display a progress value on the layer, the progress value indicating the download progress of the target program.

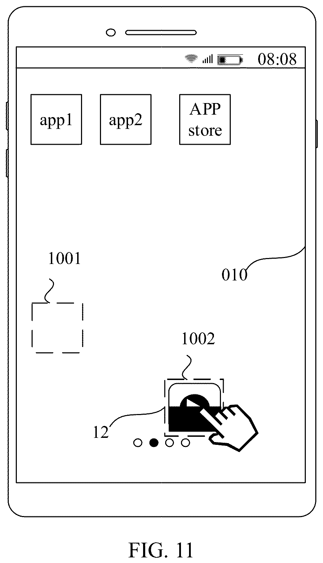

For example, as shown in FIG. 11 in conjunction with FIG. 10, during the download of the second video program, the mobile phone adds a mask layer to the second video icon 12, indicating that the second video program is in a downloading state, for example, the mask layer area in FIG. 11 indicates that the download progress of the second video program is 50%.

In some embodiments of this application, the second icon state indicates that the target program is in a downloading complete state.

In some embodiments of this application, the electronic device can remove the mask layer added to the target icon to indicate that the target program is in a downloading complete state. Alternatively, the electronic device can remove the layer displaying the progress value added to the target icon to indicate that the target program is in a downloading complete state.

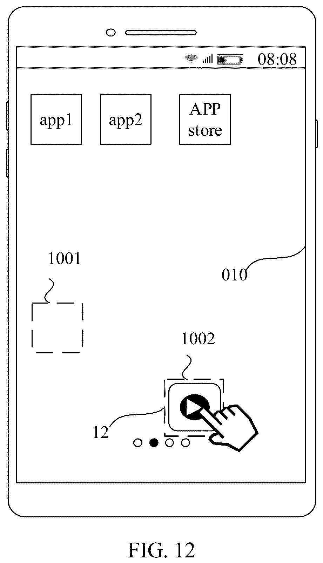

For example, as shown in FIG. 12 in conjunction with FIG. 11, after downloading of a second video is complete, the mobile phone removes a mask layer covering an icon 12 of the second video, displaying the icon 12 of the second video, indicating that the second video program is in a downloading complete state.

Step 202c3: In a case that the target object is an indication sign, the electronic device downloads the target program and, after downloading of the target program is complete, updates the indication sign to the target icon.

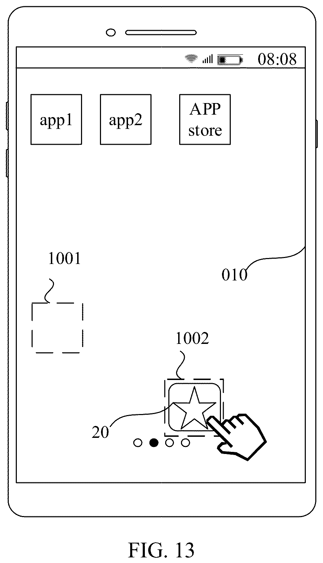

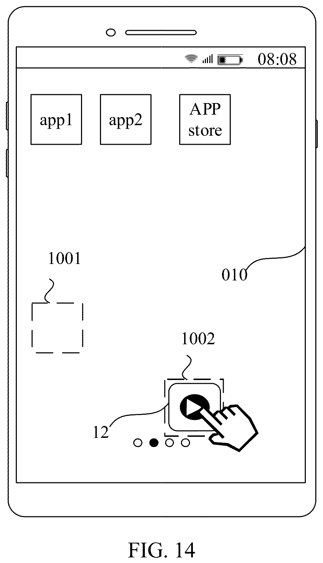

For example, as shown in FIG. 13 in conjunction with FIG. 10, the mobile phone downloads a program indicated by a program sign 12 of the second video. For example, the program sign of the second video is a pentagram sign 20. After downloading of the second video is completed, as shown in FIG. 14, the mobile phone updates the pentagram sign to the program sign 12 of the second video.

In this way, the electronic device can display the program icon of the target program at the icon position indicated by the input end position of the first input, meeting the user's icon display requirements without requiring the user to drag the program icon to the desired display position, saving the operation time for displaying the icon at the user's desired position and improving operation efficiency. In addition, the electronic device can flexibly adopt a corresponding method to display the target icon based on the target object, enhancing the display effect of the target icon.

In some embodiments of this application, before entering the program download interface or after selecting the target program sign, the icon display control method according to some embodiments of this application further includes the following steps 201b1 to 201b4.

Step 201b1: The electronic device receives a second input performed by the user for a second icon position on the desktop.

In some embodiments of this application, the second icon position may be a position on the desktop used or capable of displaying an icon.

In some embodiments of this application, the second icon position may be a blank icon position on the desktop.

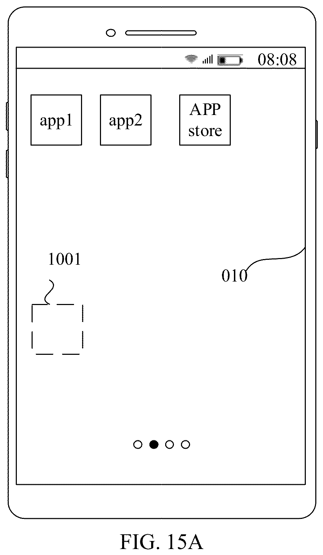

For example, as shown in FIG. 15A, the mobile phone displays a desktop 010, where the desktop 010 includes an app1 icon, an app2 icon, and an APP store icon, with a blank icon position 1001 present on the desktop 010. The user can perform a second input for the blank icon position 1001 on the desktop 010.

In some embodiments of this application, the second icon position may be an icon position displaying an icon on the desktop. In this case, the electronic device can create a folder, display the folder's icon at the icon position previously displaying an icon, and move the originally displayed icon to the folder, with the second icon position being one icon position within the folder. Alternatively, the electronic device can determine the icon position originally displaying an icon as the second icon position and move the originally displayed icon to any blank icon position on the desktop.

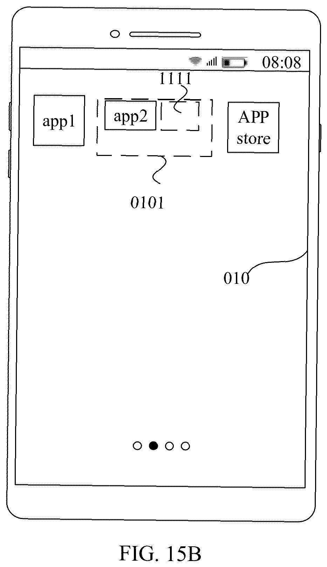

For example, as shown in FIG. 15B, the mobile phone displays a desktop 010, where the desktop 010 includes an app1 icon, an app2 icon, and an APP store icon. The user can perform a second input for the icon position displaying the app2 icon on the desktop 010. In this case, the mobile phone can create a folder A, display the folder an icon 0101 at the icon position previously displaying the app2 icon, and move the originally displayed app2 icon to the folder A, with the second icon position being an icon position 1111 within the folder A.

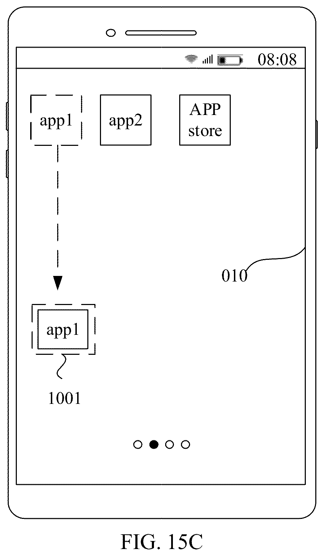

For example, as shown in FIG. 15C, the mobile phone displays a desktop 010, where the desktop 010 includes an app1 icon, an app2 icon, and an APP store icon, with a blank icon position 1001 present on the desktop 010. The user can perform a second input for the icon position displaying the app1 icon on the desktop 010 In this case, the mobile phone can determine the icon position originally displaying the app1 icon as the second icon position and move the originally displayed app1 icon to any blank icon position on the desktop, such as a blank icon position 1001.

In some embodiments of this application, the second input is used to select an icon position for an icon of a program to be downloaded, triggering the electronic device to display the icon of the downloaded program at the icon position selected by the second input.

In some embodiments of this application, the second input includes but is not limited to: a touch input by the user on the icon position on the desktop using a touch device such as a finger or stylus, a voice command input by the user, a specific gesture input by the user, or other feasible inputs. Specifically, this may be determined based on an actual use requirement, and is not limited in this embodiment of the present invention.

Step 201b2: In response to the second input, the electronic device marks the second icon position as a target icon position for displaying an icon of a program to be downloaded.

In some embodiments of this application, the electronic device may mark the second icon position as the target icon position in a target marking manner, and the target marking manner may be any one of the following: adding a marking frame, adding a virtual icon, adding a colored layer, or the like. This may be specifically determined based on an actual use requirement, and is not limited in the embodiments of this application.

In some embodiments of this application, the shape of the marker frame may be other possible shapes such as a rectangular, triangular, circular, or irregular shape. This may be specifically determined based on an actual use requirement, and is not limited in the embodiments of this application.

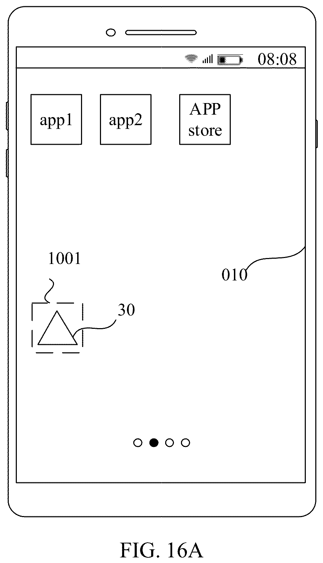

For example, as shown in FIG. 16A in conjunction with FIG. 15A, after the user performs a second input for the blank icon position 1001 on the desktop 010, the mobile phone can display a triangular mark 30 on the blank icon position 1001, with the blank icon position 1001 marked by the triangular mark 30 being the target icon position for displaying the icon of the program to be downloaded.

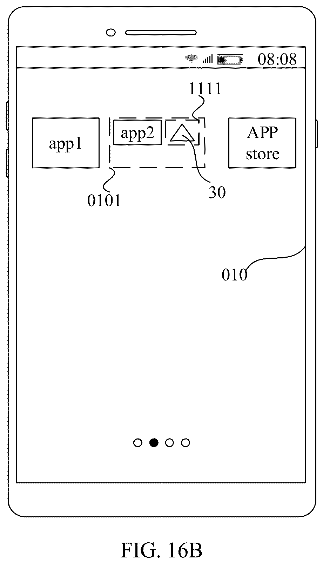

For example, as shown in FIG. 16B in conjunction with FIG. 15B, after the user performs a second input for an icon position displaying the app2 icon on the desktop 010, the mobile phone can create a folder A, display the folder an icon 0101 at the icon position previously displaying the app2 icon, and display a triangular mark 30 on an icon position 1111 within the folder A, with the icon position 1111 marked by the triangular mark 30 being the target icon position for displaying the icon of the program to be downloaded.

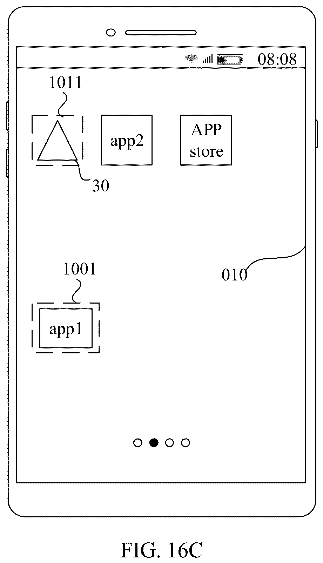

For example, as shown in FIG. 16C in conjunction with FIG. 15C, after the user performs a second input for an icon position 1011 displaying the app1 icon on the desktop 010, the mobile phone can display a triangular mark 30 on the icon position 1011 of the app1 icon, with the icon position 1011 marked by the triangular mark 30 being the target icon position for displaying the icon of the program to be downloaded, and move the originally displayed app1 icon to any blank icon position on the desktop, such as the blank icon position 1001.

Step 201b3: The electronic device receives a third input performed by the user on an APP store sign on the desktop.

In some embodiments of this application, the APP store sign is used to indicate the APP store in the electronic device. For example, the APP store sign may be a program icon of the APP store.

In some embodiments of this application, the third input is used to launch the APP store program, triggering the electronic device to run the APP store in the foreground to display a program download interface of the APP store.

In some embodiments of this application, the third input includes but is not limited to: a touch input by the user on the APP store sign on the desktop using a touch device such as a finger or stylus, a voice command input by the user, a specific gesture input by the user, or other feasible inputs. Specifically, this may be determined based on an actual use requirement, and is not limited in this embodiment of the present invention.

Step 201b4: In response to the third input, the electronic device displays the program download interface.

In some embodiments of this application, the program download interface is an interface in the APP store indicated by the APP store sign, and the interface is used for downloading application programs.

In some embodiments of this application, the program download interface includes a search control and program signs of recommended programs for download, the search control being used to search for programs to be downloaded from the APP store.

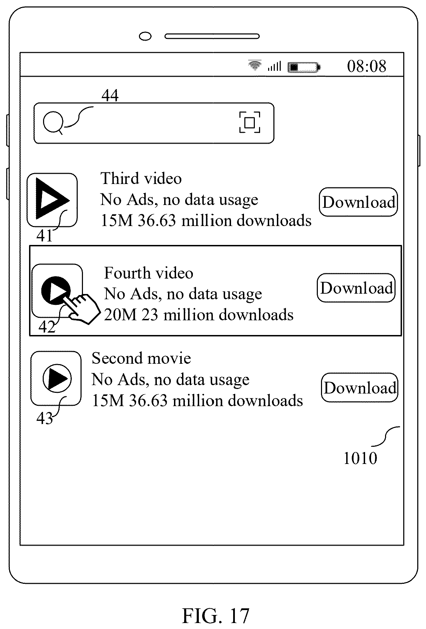

For example, the user can perform a third input on the APP store sign on the mobile phone desktop to trigger the mobile phone to enter the APP store and display the program download interface 1010 of the APP store as shown in FIG. 17, where the program download interface 1010 includes a program sign 41 of a third video recommended for download, a program sign 42 of a fourth video, a program sign 43 of a second movie, and a search control 44.

In this way, the user can determine the display position on the desktop for the program to be downloaded before downloading the program from the APP store, saving the operation time for displaying the program icon at the user's desired position after the program is downloaded, and improving operation efficiency.

In some embodiments of this application, when the user needs to download programs corresponding to multiple target program signs, the electronic device can display program icons of the programs corresponding to the multiple target program signs in a same area.

In some embodiments of this application, when the number of target program signs is N, and N is greater than 1, step 201 can specifically be implemented through the following steps 201c1, 201c2, and 201c3, and step 202 can specifically be implemented through the following steps 202d1, 202d2, and 202d3.

Step 201c1: The electronic device receives N drag sub-inputs performed by the user dragging N target program signs to a second area in the program download interface.

In some embodiments of this application, the second area may be a specific area in the program download interface, or an area in which any one of the N target program signs is located.

In some embodiments of this application, the N drag sub-inputs are used to select N target programs to be downloaded, triggering the electronic device to display signs of the N target programs selected by the user in a same area.

In some embodiments of this application, the N target program signs correspond one-to-one with the N drag sub-inputs. For example, the user can first drag one target program sign to the second area in the program download interface to complete one drag sub-input, then drag a next target program sign to the second area in the program download interface to complete a next drag sub-input, and so on, until completing the N drag sub-inputs.

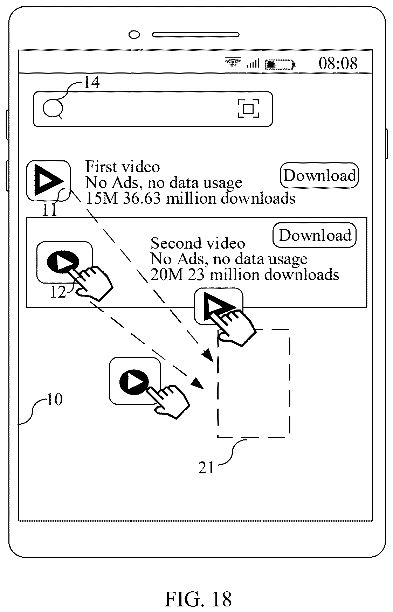

For example, as shown in FIG. 18 in conjunction with FIG. 3B, the user can first drag the first video program sign 11 to the second area in the program download interface to complete one drag sub-input, and then drag the second video program sign 12 to the second area 21 in the program download interface to complete the next drag sub-input.

In some embodiments of this application, the electronic device can receive the i-th drag sub-input performed by the user dragging the i-th target program sign to the second area in the program download interface.

For example, when i is 1, the user can first drag the first selected program sign A to the second area 21 in the program download interface to complete one drag sub-input, then drag the second program sign B to the second area 21 in the program download interface to complete the next drag sub-input, and so on, repeating the above operations until dragging the N-th program sign N to the second area 21 in the program download interface.

Step 201c2: In response to the N drag sub-inputs, the electronic device displays the N target program signs in the second area.

In some embodiments of this application, the electronic device may display the i-th target program sign in the second area in response to the i-th drag sub-input. That is, for each drag sub-input performed by the user, the electronic device responds to the drag sub-input by displaying the target program sign corresponding to each drag sub-input in the second area. For example, the electronic device can, in response to the first drag sub-input, display the target program sign corresponding to the first drag sub-input in the second area, and so on, until responding to the N-th drag sub-input to display the target program sign corresponding to the N-th drag sub-input in the second area, achieving the display of N target program signs in the second area.

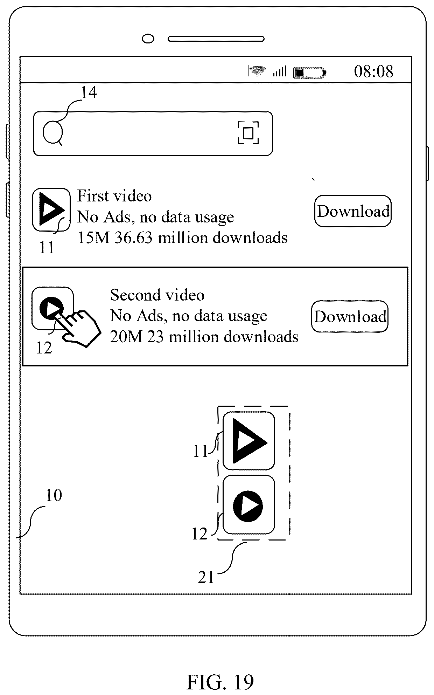

For example, as shown in FIG. 19 in conjunction with FIG. 18, after the user drags the second video program sign 12 to the second area 21 in the program download interface, the mobile phone can display the first video program sign 11 and the second video program sign 12 in the second area 21 of the program download interface 10.

Step 201c3: The electronic device receives a slide sub-input performed by the user sliding from the second area to a target icon position.

In some embodiments of this application, the slide sub-input may include two sub-inputs, where the two sub-inputs are continuous sub-inputs. One sub-input is the user sliding from the second area to the first area to trigger the electronic device to display the desktop, such as switching from the program download interface to the desktop or displaying the program download interface and the desktop in a split-screen manner; the other sub-input is, while maintaining the one sub-input, continuing to slide from the first area to the target icon position to trigger the electronic device to display the icons of the target programs corresponding to the N target program signs at the target icon position.

For example, the slide sub-input includes a sub-input 1 and a sub-input 2. The sub-input 1 is the user sliding from the second area 21 to the first area 15 to trigger the electronic device to display the desktop 010. The sub-input 2 is, while maintaining sub-input 1, that is, the input subject of the sub-input 1 does not leave the screen, continuing to slide from the first area 15 to the target icon position 1002.

Step 202d1: In response to the slide sub-input, in a case that the slide sub-input ends, the electronic device downloads N target programs corresponding to the N target program signs.

In some embodiments of this application, the N target program signs correspond one-to-one with the N target programs.

For example, the N target program signs are the "Xi** Video" program sign, the "You** Video" program sign, and the "Ku** Music" program sign, with the corresponding N target programs being the "Xi** Video" program, the "You** Video" program, and the "Ku** Music" program, respectively.

In some embodiments of this application, the slide sub-input ending can be understood as the input subject leaving the screen after sliding from the second area to the target icon position.

For example, the user's right index finger slides from the second area 21 to the first area 15, and while maintaining the right index finger on the screen, continues to slide from the first area 15 to the target icon position 1002, then the user's right index finger leaves the screen, at which point the slide sub-input ends, and the electronic device can download the N target programs corresponding to the N target program signs.

Step 202d2: After downloading of the target programs is complete, the electronic device creates a new folder icon and adds program icons of the N target programs corresponding to the N target program signs to a folder corresponding to the folder icon.

Step 202d3: The electronic device displays the folder icon at the target icon position.

In some embodiments of this application, the folder icon may be an icon composed of thumbnails of the target icons in the folder. Alternatively, the folder icon may be the icon of the folder itself.

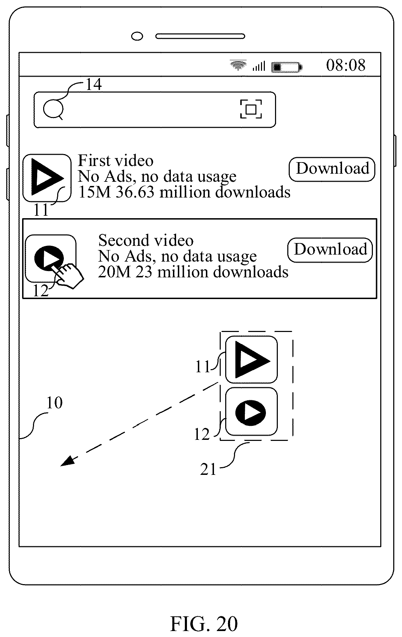

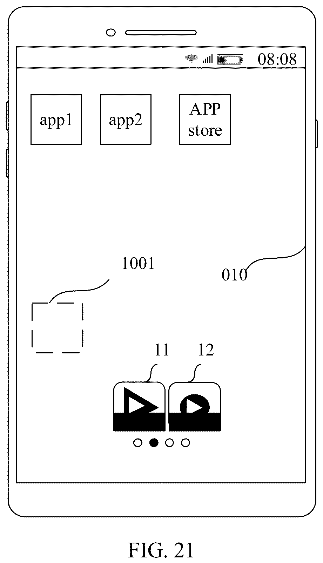

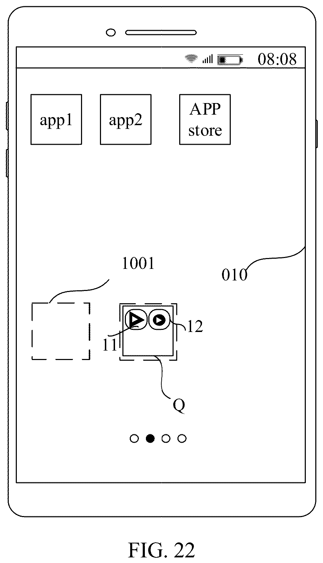

For example, as shown in FIG. 20 in conjunction with FIG. 19, the user performs a slide sub-input from the second area to the target icon position, triggering the mobile phone after the slide sub-input ends to switch from the program download interface 10 to the desktop 010 as shown in FIG. 21, and download the first video program and the second video program. As shown in FIG. 22, after the mobile phone completes downloading the first video program and the second video program, it adds the first video and the second video to a newly created folder Q and displays a folder Q icon, where the icon is composed of icons of the N target programs selected by the user, such as the first video program icon 11 and the second video program icon 12.

In this way, the electronic device moves the multiple target program icons selected by the user to a same area, enabling the electronic device to accurately know the N target programs the user intends to download; then, the user can slide from this area to the target icon position, enabling the electronic device to accurately know the user's desired icon display position. In this way, the electronic device can flexibly display the program icons of the N target programs in a folder form at the user's desired icon display position, that is, at the target icon position, meeting the user's icon display requirements without requiring the user to drag the program icons to the desired display position, saving the operation time for displaying the icons at the user's desired position and improving operation efficiency.

In some embodiments of this application, when the user needs to download programs corresponding to multiple target program signs, the electronic device can display the program icons of the programs corresponding to the multiple target program signs in different areas.

In some embodiments of this application, when the number of target program signs is N, and N is greater than 1, step 201 can specifically be implemented through the following steps 201d1, 201d2, and 201d3, and step 202 can specifically be implemented through the following steps 202e1 and 202e2.

Step 201d1: The electronic device receives N drag sub-inputs performed by the user dragging N target program signs to a third area and a slide sub-input from the third area to a fourth area.

In some embodiments of this application, the third area may be a specific area in the program download interface, or an area in which any one of the N target program signs is located.

In some embodiments of this application, the N drag sub-inputs are used to select N target programs to be downloaded, triggering the electronic device to display signs of the N target programs selected by the user in a same area.

In some embodiments of this application, the N target program signs correspond one-to-one with the N drag sub-inputs. For example, the user can first drag one target program sign to the third area in the program download interface to complete one drag sub-input, then drag a next target program sign to the second area in the program download interface to complete a next drag sub-input, and so on, until completing the N drag sub-inputs.

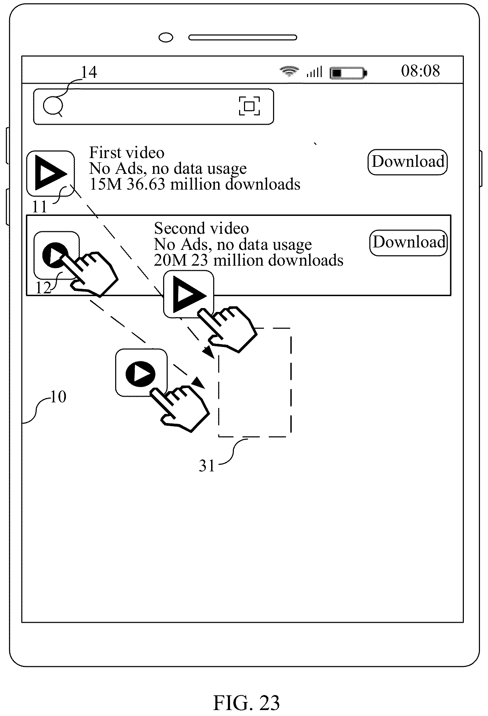

For example, as shown in FIG. 23 in conjunction with FIG. 3B, the user can first drag the first video program sign 11 to the third area in the program download interface to complete one drag sub-input, and then drag the second video program sign 12 to the third area 31 in the program download interface to complete the next drag sub-input.

In some embodiments of this application, the fourth area may be an edge area of the screen of the electronic device or a specific area in the program download interface. The specific area is a predefined area in the program download interface used to trigger switching to the desktop, or the specific area is an area displaying a switching control or a switching sign, where the switching control or switching sign is used to trigger switching from the program download interface to the desktop.

In some embodiments of this application, the slide sub-input is used to slide the N target programs selected for download from the third area to the fourth area, triggering the electronic device to switch from the program download interface to the desktop.

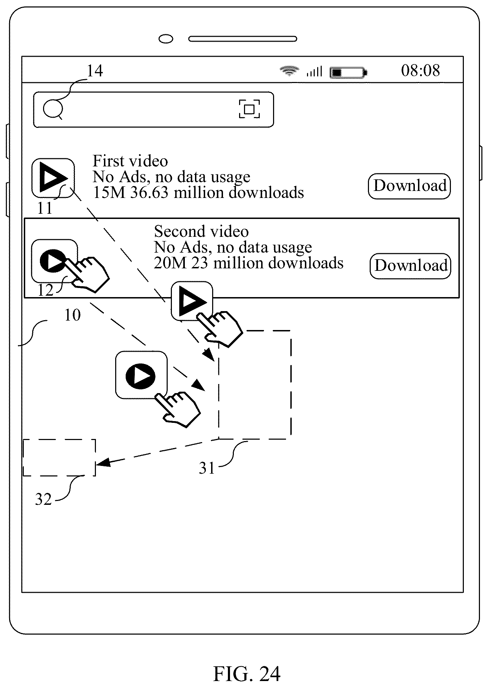

For example, as shown in FIG. 24 in conjunction with FIG. 23, in a case that the user drags the second video program sign 12 to the third area 31 in the program download interface, the user can then slide from the third area 31 to the fourth area 32 to trigger the mobile phone to display the desktop.

In some embodiments of this application, the N drag sub-inputs and the slide sub-input may be two continuous sub-inputs, that is, performing the slide sub-input while maintaining the N drag sub-inputs. Alternatively, the N drag sub-inputs and the slide sub-input may be two non-continuous sub-inputs, that is, performing the slide sub-input after the N drag sub-inputs end.

For example, the user can first drag one target program sign to the third area in the program download interface, and while maintaining one drag sub-input, perform one slide sub-input from the third area to the fourth area to complete one drag sub-input and slide sub-input, then drag the next target program sign to the third area in the program download interface, and while maintaining one drag sub-input, perform one slide sub-input from the third area to the fourth area to complete one drag sub-input and slide sub-input, and so on, until completing the N drag sub-inputs and N slide sub-inputs.

For example, the user can first drag one target program sign to the third area in the program download interface to complete one drag sub-input, then drag a next target program sign to the third area in the program download interface to complete a next drag sub-input, and so on, until completing the N drag sub-inputs, and then perform the slide sub-input from the third area to the fourth area.

Step 201d2: In response to the N drag sub-inputs and the slide sub-input, the electronic device displays the desktop.

In some embodiments of this application, displaying the desktop can be achieved in two ways: switching from the program download interface to the desktop, or displaying the program download interface and the desktop in a split-screen manner.

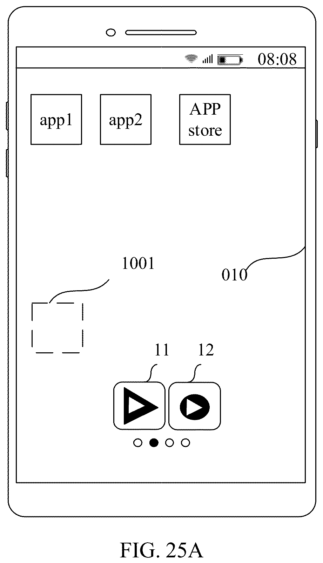

For example, as shown in FIG. 25A in conjunction with FIG. 24, after the user slides from the third area 31 to the fourth area 32, the mobile phone can switch from the program download interface 10 to the desktop 010.

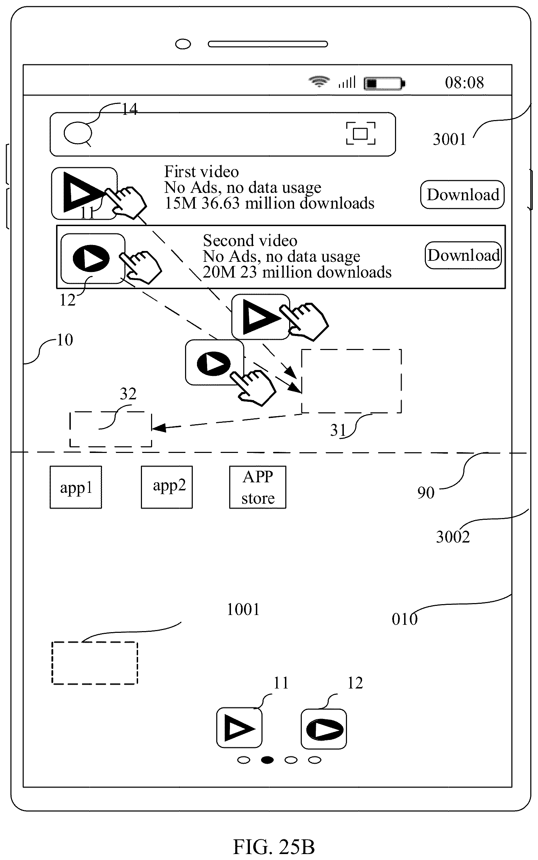

For example, as shown in FIG. 25B in conjunction with FIG. 24, after the user slides from the third area 31 to the fourth area 32, the mobile phone adopts an up-down split-screen mode with an equal split-screen ratio to divide the mobile phone screen into a screen area 3001 and a screen area 3002, where the screen area 3001 and the screen area 3002 are separated by a dividing line 90, with the screen area 3001 displaying the program download interface 10 and the screen area 3002 displaying the desktop 010.

Step 201d3: During the input process of the slide sub-input, or in a case that the slide sub-input ends, the electronic device receives N selection sub-inputs performed by the user for N icon positions.

In some embodiments of this application, the N selection sub-inputs are used to select N icon positions for the N target programs selected by the user for download.

In some embodiments of this application, the N icon positions correspond one-to-one with the N selection sub-inputs.

In some embodiments of this application, the electronic device includes multiple screen areas, and during the input process of the slide sub-input, the user can perform N selection sub-inputs for N icon positions in another screen area, where the other screen area is a screen area among the multiple screen areas that is different from the one displaying the program download interface and displays the desktop.

In some embodiments of this application, during the input process of the slide sub-input, the user can perform one input on the program download interface to trigger the electronic device to display a desktop window on the program download interface, allowing the user to perform N selection sub-inputs for N icon positions in the desktop window.

In some embodiments of this application, in a case that the slide sub-input ends, the electronic device displays the desktop, and the user can perform N selection sub-inputs for N icon positions in the displayed desktop.

In some embodiments of this application, the N selection sub-inputs may be touch inputs by the user on the N icon positions on the desktop using a touch device such as a finger or stylus, a voice command input by the user, a specific gesture input by the user, or other feasible inputs. Specifically, this may be determined based on an actual use requirement, and is not limited in this embodiment of the present invention.

Step 202e1: In response to the N selection sub-inputs, the electronic device downloads N target programs indicated by the N target program signs.

For example, the N target program signs are the "Xi** Music" program sign, the "You** Music" program sign, and the "Ku** Video" program sign, with the corresponding N target programs being the "Xi** Music" program, the "You** Music" program, and the "Ku** Video" program, respectively.

Step 202e2: The electronic device displays program icons of the N target programs at the N icon positions respectively according to an input order of the N drag sub-inputs and an input order of the N selection sub-inputs.

It should be noted that the input order of the N drag sub-inputs can be understood as a sequential order of dragging the N target program signs when dragging the N target program signs. The input order of the N selection sub-inputs can be understood as a sequential order of selecting the N icon positions when selecting the N icon positions.

For example, suppose the N target program signs are a program sign A, a program sign B, and a program sign C, and the N icon positions are an icon position 1, an icon position 2, and an icon position 3. In a case that the input order of the N drag sub-inputs is sequentially dragging the program sign B, the program sign A, and the program sign C, and the input order of the N icon positions is sequentially selecting the icon position 3, the icon position 2, and the icon position 1, the electronic device can display a program icon of the target program B corresponding to the program sign B at the icon position 3, a program icon of the target program A corresponding to the program sign A at the icon position 2, and a program icon of the target program C corresponding to the program sign C at the icon position 1.

In some embodiments of this application, the electronic device may also display the program icons of the N target programs at the N icon positions respectively in another order. For example, the other order may be an alphabetical order of the first letters of the N target programs or a download completion order of the N target programs.

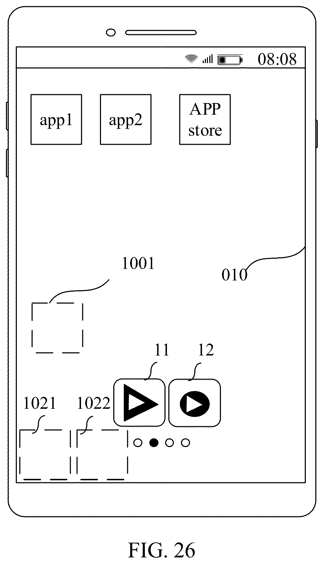

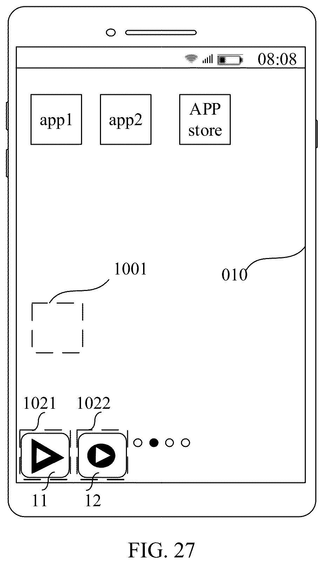

For example, as shown in FIG. 26 in conjunction with FIG. 25A, after the user performs two selection sub-inputs on two icon positions on the desktop 010, such as an icon position 1021 and an icon position 1022, the mobile phone can download a first video program and a second video program. As shown in FIG. 27, the mobile phone can display the first video program icon 11 at the icon position 1021 and the second video program icon 12 at the icon position 1022, according to the input order of the two drag sub-inputs for the first video program and the second video program and the input order of the two selection sub-inputs for the two icon positions.

In this way, the electronic device moves the multiple target program icons selected by the user to a same area, enabling the electronic device to accurately know the N target programs the user intends to download; then, the user can slide from this area to the target icon position, enabling the electronic device to accurately know the user's desired icon display position. In this way, the electronic device can display the program icons of the N target programs at the corresponding N icon display positions, that is, the target icon positions, according to the sequential order of dragging the N target program signs and selecting the N icon positions, meeting the user's icon display requirements without requiring the user to drag the program icons to the desired display positions, saving the operation time for displaying the icons at the user's desired position and improving operation efficiency.

In some embodiments of this application, the program download interface is an interface for downloading application programs, and the program download interface includes a search control. Before step 201, the icon display control method according to some embodiments of this application further includes the following steps 201a1 and 201a2, and step 201 can specifically be implemented through the following step 201a3.

Step 201a1: The electronic device receives a target keyword input by the user in the search control.

In some embodiments of this application, the search control may be a voice search control or an input method search control used for the user to input the target keyword.

In some embodiments of this application, the target keyword is a program name or a program type name.

Step 201a2: The electronic device displays at least one program sign matching the target keyword in the program download interface.

In some embodiments of this application, after receiving the target keyword, the electronic device searches among programs corresponding to the program download interface based on the target keyword, obtains search results matching the target keyword, and displays the search results in the form of at least one program sign in the program download interface.

It should be noted that the search results matching the target keyword can be understood as: the content similarity between the search results and the target keyword is greater than or equal to a preset similarity, or the match degree between the search results and the target keyword is greater than or equal to a preset match degree.

For example, when the target keyword is the program name "Xi** Video", the at least one program sign includes but is not limited to: the "Xi** Video" program sign matching the keyword "Xi** Video", the "Xi** Video Express Edition" program sign matching the keyword "Xi** Video", and the "Xi** Video Creator Edition" program sign matching the keyword "Xi** Video."

For example, when the target keyword is the program type name "video", the at least one program sign includes but is not limited to: the "Xi** Video" program sign matching the keyword "video", the "Bai** Video" program sign matching the keyword "video", and the "Kuai** Short Video" program sign matching the keyword "video."

In some embodiments of this application, the at least one program sign may be at least one program option, each program option including at least one of the following: a program name, a program icon, and a program download sign.

Step 201a3: The electronic device receives a first input performed by the user for a target program sign in the at least one program sign.

In some embodiments of this application, the target program sign is one or more program signs in the at least one program sign.

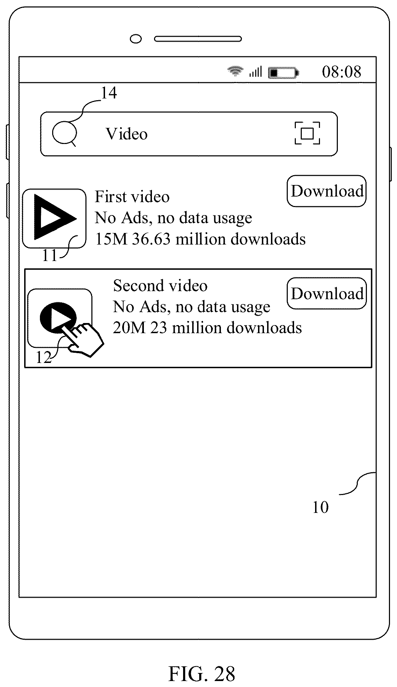

For example, as shown in FIG. 28 in conjunction with FIG. 3A, the user can input the keyword "video" in the search control 14, causing the mobile phone to display program signs matching the keyword "video", such as the first video program sign 11 and the second video program sign 12. The user can then perform a first input for a target program sign among the at least one program sign, for example, a selection input on the second video sign 12, to trigger the mobile phone to download the program indicated by the second video sign.

In this way, the user can input a keyword in the search control of the APP store's program download interface, causing the mobile phone to display search results of program signs matching the keyword. The user selects one or more program signs matching the keyword from the displayed options to trigger the electronic device to download the program indicated by the target program sign.

According to an icon display control method provided in the embodiments of this application, after receiving a first input performed by a user for a target program sign in a program download interface, the electronic device can download a target program indicated by the target program sign and display a program icon of the target program at a target icon position on a desktop. The target icon position is an icon position indicated by an input end position of the first input, or an icon position selected by the user on the desktop before entering the program download interface or after selecting the target program sign. In this solution, the user can perform a first input for the target program sign in the program download interface of the electronic device, so that after completing the download of the target program indicated by the target program sign, the electronic device can directly display the program icon of the target program at the icon position indicated by the input end position of the first input, or directly display the program icon of the target program at the icon position selected by the user on the desktop before entering the program download interface, or directly display the program icon of the target program at the icon position selected by the user on the desktop after selecting the target program sign, to meet the user's icon display requirements without requiring the user to drag the program's icon to the desired display position. This simplifies the operation of icon display control and improves operation efficiency.

It should be noted that the icon display control method provided by the embodiments of this application may be executed by an electronic device or an icon display control apparatus. In some embodiments of this application, the icon display control method executed by an electronic device is used as an example to illustrate the icon display control method provided by the embodiments of this application.

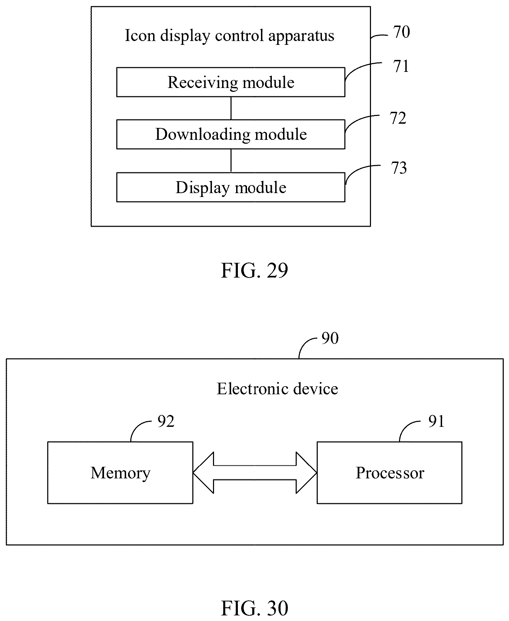

FIG. 29 illustrates a schematic diagram of a possible structure of an icon display control apparatus involved in some embodiments of this application. As shown in FIG. 29, the icon display control apparatus 70 may include: a receiving module 71, configured to receive a first input performed by a user for a target program sign in a program download interface; a downloading module 72, configured to download a target program in response to the first input received by the receiving module; and a display module 73, configured to display a target icon at a target icon position on a desktop; where the target program is a program indicated by the target program sign; the target icon is a program icon of the target program; and the target icon position is an icon position indicated by an input end position of the first input, or the target icon position is an icon position selected by the user on the desktop before entering the program download interface or after selecting the target program sign.

According to the icon display control apparatus in this embodiment of the application, the user can perform a first input for the target program sign in the program download interface of the icon display control apparatus, so that after completing the download of the target program indicated by the target program sign, the icon display control apparatus can directly display the program icon of the target program at the icon position indicated by the input end position of the first input, or directly display the program icon of the target program at the icon position selected by the user on the desktop before entering the program download interface, or directly display the program icon of the target program at the icon position selected by the user on the desktop after selecting the target program sign, to meet the user's icon display requirements without requiring the user to drag the program's icon to the desired display position. This simplifies the operation of icon display control and improves operation efficiency.

In some embodiments of this application, the program download interface is an interface for downloading application programs, the program download interface including a program sign of at least one recommended application program for download. Before the target program is downloaded and the target icon is displayed at the target icon position on the desktop, the apparatus further includes: a control module, configured to: before the target program is downloaded and the target icon is displayed at the target icon position on the desktop, in a case that the first input is a slide input and an input start position of the first input is located at the target program sign, controlling a target object to follow movement of an input subject of the first input, where the target object is the target icon or an indication sign used to indicate the target program.

In some embodiments of this application, the apparatus further includes a determining module, configured to: in a case that the desktop is displayed and the first input ends, determine a first icon position at which the target object is located at the end of the first input as the target icon position; where The downloading module 72 is specifically configured to download the target program in a case that the target object is the target icon. The display module 73 is specifically configured to update the target icon to a first icon state during the downloading process, and update the target icon to a second icon state after the target program is downloaded; where the first icon state indicates that the target program is in a downloading state, and the second icon state indicates that the target program is in a downloading complete state; and The downloading module 72 is specifically configured to download the target program in a case that the target object is an indication sign. The display module 73 is specifically configured to update the indication sign to the target icon after downloading of the target program is complete.

In some embodiments of this application, the display module 73 is further configured to: after the control module controls the target object to follow movement of the input subject of the first input, in a case that the indication sign follows movement of the input subject of the first input to a first area in the program download interface, or a distance moved by the indication sign following the input subject of the first input is greater than or equal to a distance threshold, switch the program download interface to the desktop, or display the program download interface and the desktop in a split-screen manner.

In some embodiments of this application, the receiving module 71 is further configured to receive a second input performed by the user for a second icon position on the desktop before entering the program download interface or after selecting the target program sign. The apparatus further includes: a marking module, configured to: in response to the second input, mark the second icon position as a target icon position for displaying an icon of a program to be downloaded. The receiving module 71 is further configured to receive a third input performed by the user on an APP store sign on the desktop. The display module 73 is further configured to display the program download interface in response to the third input.

In some embodiments of this application, in a case that the number of target program signs is N, and N is greater than 1, the receiving module 71 is specifically configured to receive N drag sub-inputs performed by the user dragging N target program signs to a second area in the program download interface; in response to the N drag sub-inputs, display the N target program signs in the second area; and receive a slide sub-input performed by the user sliding from the second area to the target icon position. The downloading module 72 is specifically configured to: in response to the slide sub-input, in a case that the slide sub-input ends, download N target programs corresponding to the N target program signs. The apparatus further includes an execution module, configured to: after downloading of the target programs is complete, create a new folder icon and add program icons of the N target programs corresponding to the N target program signs to a folder corresponding to the folder icon. The display module 73 is specifically configured to display the folder icon at the target icon position.

In some embodiments of this application, in a case that the number of the target program signs is N, and N is greater than 1, the receiving module 71 is specifically configured to receive N drag sub-inputs performed by the user dragging N target program signs to a third area and a slide sub-input from the third area to a fourth area; display the desktop in response to the N drag sub-inputs and the slide sub-input; and during the input process of the slide sub-input, or in a case that the slide sub-input ends, receive N selection sub-inputs performed by the user for N icon positions. The downloading module 72 is specifically configured to: in response to the N selection sub-inputs, download N target programs indicated by the N target program signs. The display module 73 is specifically configured to: display program icons of the N target programs at the N icon positions respectively according to an input order of the N drag sub-inputs and an input order of the N selection sub-inputs.

In some embodiments of this application, the program download interface is an interface for downloading application programs, and the program download interface includes a search control. The receiving module 71 is further configured to, before receiving the first input performed by the user for the target program sign in the program download interface, receive a target keyword input by the user in the search control. The display module 73 is further configured to display at least one program sign matching the target keyword in the program download interface. The receiving module 71 is specifically configured to receive a first input performed by the user for a target program sign in the at least one program sign.

The icon display control apparatus in some embodiments of this application can be an electronic device or a component in the electronic device, such as an integrated circuit or a chip. The electronic device may be a terminal or a device other than terminals. For example, the mobile electronic device may be a mobile phone, a tablet computer, a notebook computer, a palmtop computer, an in-vehicle electronic device, a mobile Internet device (Mobile Internet Device, MID), an augmented reality (augmented reality, AR)/virtual reality (virtual reality, VR) device, a robot, a wearable device, an ultra-mobile personal computer (ultra-mobile personal computer, UMPC), a netbook, a personal digital assistant (personal digital assistant, PDA), or the like. The non-mobile electronic device may be a server, a network attached storage (Network Attached Storage, NAS), a personal computer (personal computer, PC), a television (television, TV), a teller machine, a self-service machine, or the like. This is not specifically limited in the embodiments of this application.

The icon display control apparatus in some embodiments of this application may be an apparatus with an operating system. The operating system may be an Android (Android) operating system, an iOS operating system, or other possible operating systems, and is not specifically limited in the embodiments of this application.

The icon display control apparatus provided in this embodiment of this application is capable of implementing the processes that are implemented in the foregoing method embodiments. To avoid repetition, details are not described herein again.

As shown in FIG. 30, an embodiment of this application further provides an electronic device 90, which includes a processor 91 and a memory 92. The memory 92 stores a program or instructions executable on the processor 91. When the program or instructions are executed by the processor 91, the steps of the foregoing icon display control method embodiment can be implemented, with the same technical effects achieved. To avoid repetition, details are not described herein again.

It should be noted that the electronic device in some embodiments of this application includes the foregoing mobile electronic device and non-mobile electronic device.

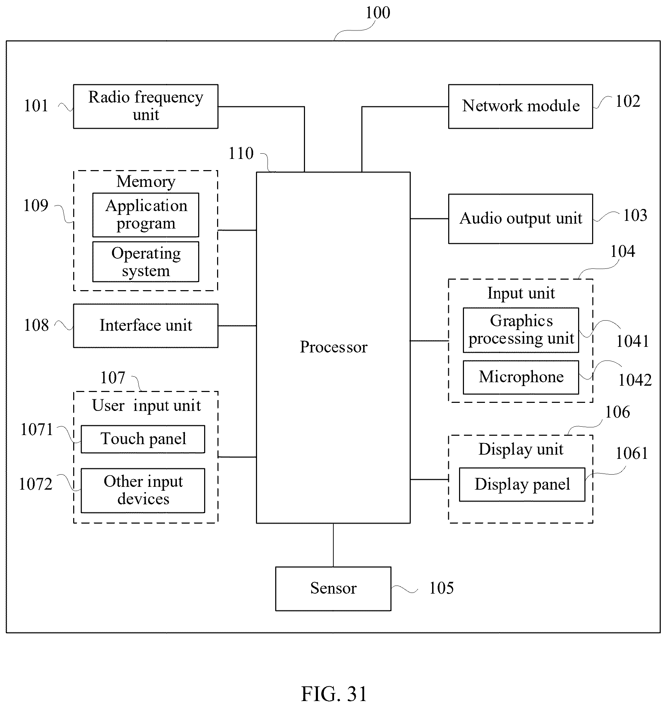

FIG. 31 is a schematic diagram of a hardware structure of an electronic device according to an embodiment of this application.

The electronic device 100 includes but is not limited to components such as a radio frequency unit 101, a network module 102, an audio output unit 103, an input unit 104, a sensor 105, a display unit 106, a user input unit 107, an interface unit 108, a memory 109, and a processor 110.

Those skilled in the art can understand that the electronic device 100 may further include a power supply (for example, a battery) that supplies power to various components. The power supply may be logically connected to the processor 110 through a power management system, so that functions such as charge and discharge management and power consumption management are implemented by using the power management system. The structure of the electronic device shown in FIG. 31 does not constitute a limitation on the electronic device. The electronic device may include more or fewer components than those shown in the figure, or some components may be combined, or there may be a different component layout. Details are not described herein again.

The user input unit 107 is configured to receive a first input performed by a user for a target program sign in a program download interface;

The processor 110 is configured to download the target program in response to the first input.

The display unit 106 is configured to display a target icon at a target icon position on a desktop.

The target program is a program indicated by the target program sign; the target icon is a program icon of the target program; the target icon position is an icon position indicated by an input end position of the first input, or the target icon position is an icon position selected by the user on the desktop before entering the program download interface or after selecting the target program sign.

The embodiments of this application provides an electronic device, where the user can perform a first input for the target program sign in the program download interface of the electronic device, so that after completing the download of the target program indicated by the target program sign, the electronic device can directly display the program icon of the target program at the icon position indicated by the input end position of the first input, or directly display the program icon of the target program at the icon position selected by the user on the desktop before entering the program download interface, or directly display the program icon of the target program at the icon position selected by the user on the desktop after selecting the target program sign, to meet the user's icon display requirements without requiring the user to drag the program's icon to the desired display position. This simplifies the operation of icon display control and improves operation efficiency.

In some embodiments of this application, the program download interface is an interface for downloading application programs, the program download interface including a program sign of at least one recommended application program for download. The processor 110 is configured to: before the target program is downloaded and the target icon is displayed at the target icon position on the desktop, in a case that the first input is a slide input and an input start position of the first input is located at the target program sign, controlling a target object to follow movement of an input subject of the first input, where the target object is the target icon or an indication sign used to indicate the target program.

In some embodiments of this application, the processor is specifically configured to: in a case that the desktop is displayed and the first input ends, determine a first icon position at which the target object is located at the end of the first input as the target icon position; and download the target program in a case that the target object is the target icon.

The display unit 106 is specifically configured to update the target icon to a first icon state during the downloading process, and update the target icon to a second icon state after the target program is downloaded; where the first icon state indicates that the target program is in a downloading state, and the second icon state indicates that the target program is in a downloading complete state.

The processor 110 is specifically configured to download the target program in a case that the target object is an indication sign. The display unit 106 is specifically configured to update the indication sign to the target icon after downloading of the target program is complete.

In some embodiments of this application, the display unit 106 is further configured to: after the processor 110 controls the target object to follow movement of the input subject of the first input, in a case that the indication sign follows movement of the input subject of the first input to a first area in the program download interface, or a distance moved by the indication sign following the input subject of the first input is greater than or equal to a distance threshold, switch the program download interface to the desktop, or display the program download interface and the desktop in a split-screen manner.

In some embodiments of this application, the user input unit 107 is further configured to receive a second input performed by the user for a second icon position on the desktop before entering the program download interface or after selecting the target program sign. The processor 110 is further configured to: in response to the second input, mark the second icon position as a target icon position for displaying an icon of a program to be downloaded. The user input unit 107 is further configured to receive a third input performed by the user on an APP store sign on the desktop. The display unit 106 is further configured to display the program download interface in response to the third input.

In some embodiments of this application, the user input unit 107 is specifically configured to: in a case that the number of target program signs is N, and N is greater than 1, receive N drag sub-inputs performed by the user dragging N target program signs to a second area in the program download interface.

The display unit 106 is further configured to: in response to the N drag sub-inputs, display the N target program signs in the second area.

The user input unit 107 is specifically configured to receive a slide sub-input performed by the user sliding from the second area to a target icon position.

The processor 110 is specifically configured to: in response to the slide sub-input, in a case that the slide sub-input ends, download N target programs corresponding to the N target program signs; and after downloading of the target programs is complete, create a new folder icon and add program icons of the N target programs corresponding to the N target program signs to a folder corresponding to the folder icon.

The display unit 106 is specifically configured to display the folder icon at the target icon position.

In some embodiments of this application, the user input unit 107 is specifically configured to: in a case that the number of target program signs is N, and N is greater than 1, receive N drag sub-inputs performed by the user dragging N target program signs to a third area and a slide sub-input from the third area to a fourth area.

The display unit 106 is further configured to display the desktop in response to the N drag sub-inputs and the slide sub-input.

The user input unit 107 is specifically configured to: during the input process of the slide sub-input, or in a case that the slide sub-input ends, receive N selection sub-inputs performed by the user for N icon positions.

The processor 110 is specifically configured to: in response to the N selection sub-inputs, download N target programs indicated by the N target program signs.

The display unit 106 is specifically configured to: display program icons of the N target programs at the N icon positions respectively according to an input order of the N drag sub-inputs and an input order of the N selection sub-inputs.

In some embodiments of this application, the program download interface is an interface for downloading application programs, and the program download interface includes a search control. The user input unit 107 is further configured to: before receiving the first input performed by the user for the target program sign in the program download interface, receive a target keyword input by the user in the search control. The display unit 106 is further configured to display at least one program sign matching the target keyword in the program download interface. The user input unit 107 is specifically configured to receive a first input performed by the user for a target program sign in the at least one program sign.

The electronic device provided in this embodiment of this application can implement the processes implemented in the foregoing method embodiment, with the same technical effects achieved. To avoid repetition, details are not described herein again.

For beneficial effects of various implementations in this embodiment, reference may be specifically made to the beneficial effects of the corresponding implementations in the foregoing method embodiments. To avoid repetition, details are not described herein again.

It can be understood that in some embodiments of this application, the input unit 104 may include a graphics processing unit (Graphics Processing Unit, GPU) 1041 and a microphone 1042. The graphics processing unit 1041 processes image data of a still picture or video obtained by an image capture apparatus (such as a camera) in a video capture mode or an image capture mode. The display unit 106 may include a display panel 1061. The display panel 1061 may be configured in a form of a liquid crystal display, an organic light-emitting diode display, or the like. The user input unit 107 includes at least one of a touch panel 1071 and other input devices 1072. The touch panel 1071 is also referred to as a touchscreen. The touch panel 1071 may include two parts: a touch detection apparatus and a touch controller. The other input devices 1072 may include but be not limited to a physical keyboard, a function key (such as a volume control key or an on/off key), a trackball, a mouse, and a joystick. Details are not described herein.

The memory 109 may be configured to store software programs and various data. The memory 109 may mainly include a first storage area for storing programs or instructions and a second storage area for storing data, where the first storage area may store an operating system, an application program or instructions required by at least one function (for example, an audio playing function and an image playing function), and the like. The memory 109 may include a volatile memory or a non-volatile memory, or the memory 109 may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static RAM (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 109 described in some embodiments of this application is intended to include but is not limited to these and any other suitable types of memories.

The processor 110 may include one or more processing units. In some embodiments of this application, the processor 110 may integrate an application processor and a modem processor. The application processor primarily processes operations involving an operating system, user interface, application program, or the like. The modem processor primarily processes radio communication signals, for example, being a baseband processor. It can be understood that the modem processor may alternatively be not integrated in the processor 110.

An embodiment of this application further provides a readable storage medium, where a program or instructions are stored in the readable storage medium. When the program or the instructions are executed by a processor, the processes of the foregoing icon display control method embodiment are implemented, with same technical effects achieved. To avoid repetition, details are not described herein again.

The processor is the processor in the sensing device in the foregoing embodiment. The readable storage medium includes a computer-readable storage medium such as a computer read-only memory ROM, a random access memory RAM, a magnetic disk, or an optical disc.

An embodiment of this application further provides a chip, where the chip includes a processor and a communication interface, the communication interface is coupled to the processor, and the processor is configured to run a program or instructions to implement the foregoing icon display control method embodiments, with the same technical effects achieved. To avoid repetition, details are not repeated herein.

It should be understood that the chip mentioned in this embodiment of this application may also be referred to as a system-on-chip, a system chip, a system-on-a-chip, or a system on a chip, or the like.

An embodiment of this application provides a computer program product, where the program product is stored in a storage medium, and when being executed by at least one processor, the program product is configured to implement the processes of the foregoing embodiments of the icon display control method, with the same technical effects achieved. To avoid repetition, details are not repeated herein.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and apparatus in the implementations of this application is not limited to functions being performed in the order shown or discussed, but may further include functions being performed at substantially the same time or in a reverse order, depending on the functions involved. For example, the described method may be performed in an order different from the order described, and steps may be added, omitted, or combined. In addition, features described with reference to some examples can be combined in other examples.

By means of the foregoing description of the implementations, persons skilled in the art may clearly understand that the method in the foregoing embodiment may be implemented by software with a necessary general hardware platform. Certainly, the method in the foregoing embodiment may also be implemented by hardware. However, in many cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. An icon display control method, wherein the method comprises:
receiving a first input performed by a user for a target program sign in a program download interface; and
in response to the first input, downloading a target program and displaying a target icon at a target icon position on a desktop; wherein
the target program is a program indicated by the target program sign; the target icon is a program icon of the target program; and the target icon position is an icon position indicated by an input end position of the first input, or the target icon position is an icon position selected by a user on the desktop before entering the program download interface or after selecting the target program sign.

2. The method according to claim 1, wherein the program download interface is an interface for downloading application programs, and the program download interface comprises a program sign of at least one recommended application program for download; and
before the downloading a target program and displaying a target icon at a target icon position on a desktop, the method further comprises:
in a case that the first input is a slide input and an input start position of the first input is located at the target program sign, controlling a target object to follow movement of an input subject of the first input, wherein the target object is the target icon or an indication sign used to indicate the target program.

3. The method according to claim 2, wherein the downloading a target program and displaying a target icon at a target icon position on a desktop comprises:
in a case that the desktop is displayed and the first input ends, determining a first icon position at which the target object is located at an end of the first input as the target icon position;
in a case that the target object is the target icon, downloading the target program, updating the target icon to a first icon state during a downloading process, and updating the target icon to a second icon state after the target program is downloaded; wherein the first icon state indicates that the target program is in a downloading state, and the second icon state indicates that the target program is in a downloading complete state; and
in a case that the target object is the indication sign, downloading the target program and, after downloading of the target program is complete, updating the indication sign to the target icon.

4. The method according to claim 2, wherein after the controlling a target object to follow movement of an input subject of the first input, the method further comprises:
in a case that the indication sign follows the movement of the input subject of the first input to a first area in the program download interface, or a distance moved by the indication sign following the input subject of the first input is greater than or equal to a distance threshold, switching the program download interface to the desktop, or displaying the program download interface and the desktop in a split-screen manner.

5. The method according to claim 1, wherein before entering the program download interface or after selecting the target program sign, the method further comprises:
receiving a second input performed by a user for a second icon position on the desktop;
in response to the second input, marking the second icon position as a target icon position for displaying an icon of a program to be downloaded;
receiving a third input performed by a user for an application (APP) store sign on the desktop; and
displaying the program download interface in response to the third input.

6. The method according to claim 1, wherein in a case that the number of target program signs is N, and N is greater than 1, the receiving a first input performed by a user for a target program sign in a program download interface comprises:
receiving N drag sub-inputs performed by the user dragging N target program signs to a second area in the program download interface;
in response to the N drag sub-inputs, displaying the N target program signs in the second area; and
receiving a slide sub-input performed by the user sliding from the second area to the target icon position; and
the in response to the first input, downloading a target program and displaying a target icon at a target icon position on a desktop comprises:
in response to the slide sub-input, in a case that the slide sub-input ends, downloading N target programs corresponding to the N target program signs;
after downloading of the target programs is complete, creating a new folder icon and adding program icons of the N target programs corresponding to the N target program signs to a folder corresponding to the folder icon; and
displaying the folder icon at the target icon position.

7. The method according to claim 1, wherein in a case that the number of target program signs is N, and N is greater than 1, the receiving a first input performed by a user for a target program sign in a program download interface comprises:
receiving N drag sub-inputs performed by the user dragging N target program signs to a third area and a slide sub-input from the third area to a fourth area;
displaying the desktop in response to the N drag sub-inputs and the slide sub-input; and
during an input process of the slide sub-input, or in a case that the slide sub-input ends, receiving N selection sub-inputs performed by the user for N icon positions; and
the in response to the first input, downloading a target program and displaying a target icon at a target icon position on a desktop comprises:
in response to the N selection sub-inputs, downloading N target programs indicated by the N target program signs and displaying program icons of the N target programs at the N icon positions respectively according to an input order of the N drag sub-inputs and an input order of the N selection sub-inputs.

8. The method according to claim 1, wherein the program download interface is an interface for downloading application programs, and the program download interface comprises a search control;
before the receiving a first input performed by a user for a target program sign in a program download interface, the method further comprises:
receiving a target keyword input by a user in the search control; and
displaying at least one program sign matching the target keyword in the program download interface; and
the receiving a first input performed by a user for a target program sign in a program download interface comprises:
receiving a first input performed by the user for a target program sign in the at least one program sign.

9. An icon display control apparatus, wherein the apparatus comprises:
a receiving module configured to receive a first input performed by a user for a target program sign in a program download interface;
a downloading module, configured to download a target program in response to the first input received by the receiving module; and
a display module, configured to display a target icon at a target icon position on a desktop; wherein
the target program is a program indicated by the target program sign; the target icon is a program icon of the target program; and the target icon position is an icon position indicated by an input end position of the first input, or the target icon position is an icon position selected by a user on the desktop before entering the program download interface or after selecting the target program sign.

10. The apparatus according to claim 9, wherein the program download interface is an interface for downloading application programs, and the program download interface comprises a program sign of at least one recommended application program for download; and
the apparatus further comprises:
a control module, configured to: before the target program is downloaded and the target icon is displayed at the target icon position on the desktop, in a case that the first input is a slide input and an input start position of the first input is located at the target program sign, controlling a target object to follow movement of an input subject of the first input, wherein the target object is the target icon or an indication sign used to indicate the target program.

11. The apparatus according to claim 10, wherein the apparatus further comprises:
a determining module, configured to: in a case that the desktop is displayed and the first input ends, determine a first icon position at which the target object is located at an end of the first input as the target icon position; wherein
the downloading module is specifically configured to: in a case that the target object is the target icon, download the target program; the display module is specifically configured to update the target icon to a first icon state during a downloading process, and update the target icon to a second icon state after the target program is downloaded; wherein the first icon state indicates that the target program is in a downloading state, and the second icon state indicates that the target program is in a downloading complete state; and
the downloading module, specifically configured to download the target program in a case that the target object is the indication sign; and the display module is specifically configured to update the indication sign to the target icon after downloading of the target program is complete.

12. The apparatus according to claim 10, wherein the display module is further configured to: after the control module controls the target object to follow movement of the input subject of the first input, in a case that the indication sign follows the movement of the input subject of the first input to a first area in the program download interface, or a distance moved by the indication sign following the input subject of the first input is greater than or equal to a distance threshold, switch the program download interface to the desktop, or display the program download interface and the desktop in a split-screen manner.

13. The apparatus according to claim 9, wherein the receiving module is further configured to receive a second input performed by a user for a second icon position on the desktop before entering the program download interface or after selecting the target program sign;
the apparatus further comprises: a marking module, configured to: in response to the second input, mark the second icon position as a target icon position for displaying an icon of a program to be downloaded;
the receiving module is further configured to receive a third input performed by a user for an application (APP) store sign on the desktop; and
the display module is further configured to display the program download interface in response to the third input.

14. The apparatus according to claim 9, wherein in a case that the number of target program signs is N, and N is greater than 1, the receiving module is specifically configured to receive N drag sub-inputs performed by the user dragging N target program signs to a second area in the program download interface; in response to the N drag sub-inputs, display the N target program signs in the second area; and receive a slide sub-input performed by the user sliding from the second area to the target icon position;
the downloading module is specifically configured to: in response to the slide sub-input, in a case that the slide sub-input ends, download N target programs corresponding to the N target program signs;
the apparatus further comprises:
an execution module, configured to: after downloading of the target programs is complete, create a new folder icon and add program icons of the N target programs corresponding to the N target program signs to a folder corresponding to the folder icon; and
the display module is specifically configured to display the folder icon at the target icon position.

15. The apparatus according to claim 9, wherein in a case that the number of the target program signs is N, and N is greater than 1, the receiving module is specifically configured to receive N drag sub-inputs performed by the user dragging N target program signs to a third area and a slide sub-input from the third area to a fourth area; display the desktop in response to the N drag sub-inputs and the slide sub-input; and during an input process of the slide sub-input, or in a case that the slide sub-input ends, receive N selection sub-inputs performed by the user for N icon positions;
the downloading module is specifically configured to: in response to the N selection sub-inputs, download N target programs indicated by the N target program signs; and
the display module is specifically configured to: display program icons of the N target programs at the N icon positions respectively according to an input order of the N drag sub-inputs and an input order of the N selection sub-inputs.

16. The apparatus according to claim 9, wherein the program download interface is an interface for downloading application programs, and the program download interface comprises a search control;
the receiving module is further configured to, before receiving the first input performed by the user for the target program sign in the program download interface, receive a target keyword input by a user in the search control;
the display module is further configured to display at least one program sign matching the target keyword in the program download interface; and
the receiving module is specifically configured to receive a first input performed by the user for a target program sign in the at least one program sign.

17. An electronic device, comprising a processor and a memory, wherein the memory stores a program or instructions executable on the processor, and when the program or instructions are executed by the processor, the steps of the icon display control method according to any one of claims 1 to 8 are implemented.

18. A readable storage medium, wherein the readable storage medium stores a program or instructions, and when the program or the instructions are executed by a processor, the steps of the icon display control method according to any one of claims 1 to 8 are implemented.

19. A computer program product, wherein the computer program product is stored in a storage medium, and the computer program product is executed by at least one processor to implement the steps of the icon display control method according to any one of claims 1 to 8.

20. A chip, wherein the chip comprises a processor and a communication interface, the communication interface is coupled to the processor, and the processor is configured to execute a program or instructions to implement the steps of the icon display control method according to any one of claims 1 to 8.
